# EUROPÄISCHE PATENTSCHRIFT

(11) **EP 2 963 198 B1**
(45) Veröffentlichungstag und Bekanntmachung des Hinweises auf die Patenterteilung: **11.11.2020**
(21) Anmeldenummer: 14175101.6
(22) Anmeldetag: 30.06.2014
(51) Int. Cl.: E04B 1/74, E04B 1/76, E04B 1/90

(54) **VERFAHREN ZUR HERSTELLUNG FLAMMENGESCHÜTZTER DÄMMSTOFFPLATTEN**
METHOD FOR PRODUCING FLAME-RETARDING PANELS OF INSULATING MATERIAL
PROCÉDÉ DE FABRICATION DE PLAQUES IGNIFUGES EN MATÉRIAU ISOLANT

(43) Veröffentlichungstag der Anmeldung: 06.01.2016
(73) Patentinhaber: NAPORO Klima Dämmstoff GmbH, 4320 Perg, (AT)
(72) Erfinder: SCHWEMMER, Robert, 84367 Reut (DE); MÜKISCH, Herbert, 3072 Kasten (AT)
(74) Vertreter: Metten, Karl-Heinz

(56) Entgegenhaltungen:
- EP-A2- 1 314 705
- EP-A2- 2 048 295
- WO-A1-96/33306
- WO-A1-03/021026
- DE-A1- 19 807 821
- DE-U1- 20 215 951

## Beschreibung

Die vorliegende Erfindung betrifft ein Verfahren zur Herstellung von flammgeschützten Dämmstoffplatten sowie die nach diesem Verfahren erhältlichen Dämmstoffplatten.

In Anbetracht der Notwendigkeit, Ressourcen schonender zu verwenden, sowie aus Gründen der Kostenersparnis gewinnt die Wärmedämmung von Gebäudeaußenfassaden zunehmend an Bedeutung. Hierfür wird auf synthetische Produkte wie EPS-Dämmplatten wie auch auf Dämmplatten aus nachwachsenden Rohstoffen, beispielsweise Dämmplatten enthaltend Hanf oder Flachs, zurückgegriffen. Während der Anbringung solcher Dämmplatten an die Außenfassade sind diese Materialien kurzeitig der Möglichkeit der Entzündung ausgesetzt, und zwar bis zu der Anbringung einer Putzschicht, mit der die Dämmplatten auch gegen die Entstehung eines Brandes geschützt werden. Aus dem genannten Grund werden Wärmedämmplatten mit einem Flammschutzmittel ausgestattet. Wärmedämmplatten aus Naturfasern werden regelmäßig im Herstellungsprozess mit wässrigen Lösungen enthaltend ein Flammschutzmittel versetzt bzw. getränkt. Hiermit geht die Gefahr einher, dass die Fasermaterialien zu viel Feuchtigkeit aufnehmen und ihre innere Struktur verlieren bzw. energieaufwendig getrocknet werden müssen, um für den Prozess der Dämmplattenherstellung weiter verwendet werden zu können. Versucht man den Feuchteeintrag zu verringern, um nicht mit dem geschilderten Problem konfrontiert zu werden, wird regelmäßig zu wenig Flammschutzmittel in die Wärmedämmplatte eingebracht.

Dokument WO 96/33306 offenbart ein Verfahren zur Herstellung einer flammgeschützten Faservliesmatte gemäß bestimmten Merkmalen von Anspruch 1 und eine Faservliesmatte gemäß bestimmten Merkmalen von Anspruch 15.

Es wäre daher wünschenswert, ein Verfahren zur Herstellung von Wärmedämmplatten aus natürlichen Fasern einsetzten zu können, das nicht mit den Nachteilen der Verfahren aus dem Stand der Technik behaftet ist. Der vorliegenden Erfindung lag daher die Aufgabe zugrunde, ein Verfahren für die Herstellung von Dämmstoffplatten aus nachwachsenden Rohstoffen einsetzen zu können, das Dämmstoffplatten mit einem hinreichenden Flammschutz liefert, insbesondere ohne gleichzeitig Einbußen bei deren mechanischen und/oder Wärmedämmeigenschaften in Kauf nehmen zu müssen und das gleichwohl wirtschaftlich betrieben werden kann.

Demgemäß wurde ein Verfahren zur Herstellung einer flammgeschützten Faservliesmatte, insbesondere Dämmstoffmatte, gemäß Anspruch 1 definiert.

Die Begriffe Flammenschutz bzw. Flammschutzmittel sollen im Sinne der vorliegenden Erfindung ganz allgemein verstanden werden, insbesondere auch dahingehend, dass damit jedwede Reduzierung bzw. Eliminierung der Brand- und/oder Flammenentstehung umfasst ist. Im Sinne der Erfindung zeichnet sich das zerkleinerte Pflanzenmaterial enthaltend Pflanzenfasern gemäß Schritt a) gegenüber dem zerkleinertem Pflanzenmaterial enthaltend Pflanzenfasern und Schäben dadurch aus, dass im Zerkleinerungsprozess aus dem Pflanzenmaterial Schäben gezielt abgetrennt wurden. Das zerkleinerte Pflanzenmaterial enthaltend Pflanzenfasern und Schäben kann dadurch erhalten werden, dass man das nicht aufgetrennte Pflanzenmaterial zerkleinert, so dass Pflanzenfasern und Schäben stets nebeneinander vorliegen. Alternativ ist es möglich, vorab separierte Pflanzenfasern und Schäben in wohldosierter Menge wieder zu vermischen.

Für die Herstellung der Faservliesmatten können geeignete Pflanzenfasern ausgewählt werden aus der Gruppe bestehend aus Hanf-, Flachs-, Jute-, Sisal-, Raps-, Kokos-, Kenaf-, Nessel-, Ramie-, Rohrkolben-, Getreidestroh-, Miscanthus- und Schilffasem oder Mischungen hiervon. Besonders bevorzugt wird auf die folgenden Pflanzen zur Gewinnung von Pflanzenfasern, die für die erfindungsgemäße Herstellung der Faservliesmatten geeignet sind, zurückgegriffen: Hanf, Jute, Nessel, Flachs, Kenaf, Ramie oder Miscanthus oder beliebigen Mischungen hiervon.

Werden zerkleinerte Pflanzenmaterial enthaltend Pflanzenfasern und Schäben eingesetzt, greift man vorzugsweise zurück auf Hanf-, Flachs-, Jute-, Kenaf-, Nessel-, Ramie- oder Miscanthusschäben oder beliebige Mischungen hiervon. Hierbei ist es besonders bevorzugt, wenn das zerkleinerte Pflanzenmaterial enthaltend Pflanzenfasern und Schäben durch die Zerkleinerung einer Schäben enthaltenden Pflanze erhalten wurde. Das heißt die Schäben wurden bei der Zerkleinerung des Pflanzenmaterials nicht gezielt abgetrennt. Solches zerkleinertes Pflanzenmaterial ist dabei besonders bevorzugt, bei dem Pflanzenfasern und Schäben zumindest in Teilen noch miteinander verbunden vorliegen.

Das Bindemittel kann in Form von Fasern, Granulat oder Pulver oder als beliebige Mischung dieser Bindemittelformen eingesetzt werden. Bevorzugt werden für das erfindungsgemäße Herstellungsverfahren Bindemittel in Form von Bindemittelfasern eingesetzt. Das Bindemittel basiert erfindungsgemäß auf thermoplastischen Polymeren. Diese Materialien verfügen über eine Erweichungstemperatur, auch Glasübergangstemperatur genannt, oberhalb der sie eine verformbare, schmelzeähnliche Konsistenz annehmen. Demgemäß wird bei der als Thermobonding bekannten Verfestigung der in dem Vorvlies bzw. Vlies vorliegenden Mischung an Pflanzenfasern und Bindemitteln eine Verbindung einzelnen Fasern oder Faserbündel über das temporär erweichte Bindemittel erreicht. Denn beim Abkühlen erstarren die thermoplastischen Bindemittel wieder. Als Bindefasern kommen erfindungsgemäß thermoplastische Mono- oder Multikomponentenfasern zum Einsatz, insbesondere Bikomponentenfasern. Geeignete Bikomponentenfasern können zum Beispiel auf Polyestern oder Polylactiden basieren. Als Bindemittel kann ebenfalls auf Phenolharzfasern zurückgegriffen werden. Geeignete Bindemittel, die für die Verfestigung von Faservliesen geeignet sind, sind dem Fachmann bekannt. Dieses trifft insbesondere auch zu auf geeignete Bindemittelfasern.

In einer zweckmäßigen Ausgestaltung des erfindungsgemäßen Verfahrens werden geeignete Flammschutzmittel ausgewählt aus der Gruppe bestehend aus stickstoffhaltigen Phosphaten, insbesondere Ammonium-, Melamin- oder Guanidinphosphat, Aluminiumphosphaten, Boraten, insbesondere Ammonium-, Melamin-, Guanidin-, Kalium- oder Natriumboraten, Borsäure, Borphosphorsäureestern, prä-oxidierten Viskosefasern, prä-oxidierten Polyacrylnitril-Fasern, Kohlenstofffasern und Reisschalen oder deren beliebige Mischungen. Hierbei lassen sich stickstoffhaltige Phosphate, insbesondere Ammonium-, Melamin- oder Guanidinphosphate, Aluminiumphosphate, Borate, insbesondere Ammonium-, Melamin-, Guanidin-, Kalium- oder Natriumborate, Borsäure oder Borphosphorsäureester oder deren beliebige Mischungen sehr wirksam in Form von wässrigen Systemen, beispielsweise wässrigen Lösungen, in das als Materiallage, Faserflor, Vorvlies oder Vlies vorliegende Material eintragen. Um das zerkleinerte Pflanzenmaterial mit dem Bindemittel, insbesondere der Bindemittelfaser, zu vermischen, werden gemäß des erfindungsgemäßen Verfahrens aus dem zerkleinerten Pflanzenmaterial zunächst eine Materiallage mit einer Ober- und einer Unterseite hergestellt (Schritt e)). Das zerkleinerte Pflanzenmaterial dieser Materiallage kann sodann, beispielsweise im Luftstrom, mit dem Bindemittel, insbesondere den Bindemittelfasern, versetzt werden. Ein besonders wirksamer Flammschutz wird auch dann erhalten, wenn die Materiallage umfassend das zerkleinerte Pflanzenmaterial von der Oberseite mit mindestens einem Flammschutzmittel, insbesondere mit einem wässrigen System, enthaltend mindestens ein Flammschutzmittel, beaufschlagt bzw. besprüht wird. Die Fasermischung enthaltend das zerkleinerte Pflanzenmaterial und das Bindemittel, insbesondere die Bindemittelfasern, wird im erfindungsgemäßen Verfahren zunächst auf ein Förderband unter Ausbildung eines Faserflors mit einer Ober- und einer Unterseite ausgetragen (Schritt g1)). Dieses Faserflor das regelmäßig aus Faserflocken gebildet ist, wird erfindungsgemäß mit mindestens einem Flammschutzmittel behandelt. Es hat sich als besonders zweckmäßig erwiesen, den Faserflor von der Oberseite mit einem wässrigen System, enthaltend mindestens ein Flammschutzmittel, zu beaufschlagt, vorzugsweise zu besprühen. Auf diese Weise kann die der Fasermischung zuzugeben Flüssigkeitsmenge sehr genau auf die Menge an Fasermaterial abgestimmt werden. Selbst mit einer geringen Flüssigkeitsmenge gelingt eine sehr umfassende Ausstattung des behandelten Materials mit dem Flammen Schutzmittel.

Zusätzlich oder alternativ ist es möglich, bei der sich an die Faserflorbildung anschließenden Herstellung eines Vorvlieses mittels eines Vliesbildners und/oder Vliesstreuers auch das hierbei erhaltene Vorvlies mit mindestens einem Flammenschutzmittel zu behandeln (Schritt g2)). Hierbei wird insbesondere die Oberseite des Vorvlieses mit einem wässrigen System, enthaltend mindestens ein Flammschutzmittel, behandelt, insbesondere besprüht. Auch durch die Behandlung des unverfestigten Vorvlieses mit einem Flammschutzmittel kann ein besonders wirksamer Schutz erhalten werden, und zwar ohne dass man Gefahr läuft, zu viel Feuchtigkeit in das Vorvlies einzutragen. In einer besonders bevorzugten Ausgestaltung kann bereits für die Bildung des Vorvlieses auf einen aerodynamischen Vliesbildner zurückgegriffen werden. Allerdings hat sich gezeigt, dass der Einsatz eines Vliesstreuers, insbesondere umfassend oder bestehend aus mindestens einer Stiftwalze, auf dieser Verfahrensstufe sehr zweckmäßig ist.

An die Bildung des Vorvlieses schließt sich in dem erfindungsgemäßen Verfahren die Bildung des Vlieses mittels eines Vliesbildners, insbesondere mittels eines aerodynamischen Vliesbildners, an (Verfahrensschritt h)). Solche Vliesbildner bzw. aerodynamischen Vliesbildner sind dem Fachmann bekannt. Besonders bevorzugt wird für das erfindungsgemäße Verfahren auf aerodynamische Vliesbildner enthaltend einen Tambour ausgestattet mit einem Sägezahndraht zurückgegriffen. Hierdurch gelingt eine besonders homogene Verteilung der Komponenten des Vlieses.

Auf verfahrenstechnisch einfache, gleichwohl in Sachen Flammschutz sehr wirksame Weise lässt sich Flammschutz auch dadurch erreichen, dass in Verfahrensschritt g2) prä-oxidierte Viskosefasern, prä-oxidierten Polyacrylnitril-Fasern, Kohlenstofffasern oder Reisschalen oder beliebige Mischungen dieser Verbindungen, insbesondere Reisschalen, auf das Vorvlies aufgebracht, insbesondere aufgestreut, werden.

Auch das in Verfahrensschritt h) erhaltenen ließ, das regelmäßig noch keine Verfestigungsschritt unterzogen worden ist, kann in einer besonders zweckmäßigen Ausführungsform mit mindestens einem Flammschutzmittel beaufschlagt, insbesondere von der Oberseite mit einem wässrigen System, enthaltend mindestens ein Flammschutzmittel, versetzt, insbesondere besprüht werden. Auf diese Weise gelingt häufig ein besonders ausgeprägter Flammenschutz.

Um zu einer Faservliesmatte zu gelangen, die auch als Dämmstoffmatte geeignet ist, wird das mit mindestens einem Flammschutzmittel ausgestattete Vlies einem Verfestigungsprozess unterzogen. Hierbei wird durch Anwendung von Wärme das Bindemittel, insbesondere die Bindemittelfaser aktiviert bzw. angeschmolzen, so dass eine feste Verbindung mit den Pflanzenfasern und gegebenenfalls den Schäben des zerkleinerte Pflanzenmaterials gelingt. Die Dichte der Anknüpfungspunkte und damit die Festigkeit der erhaltenen Faservliesmatte kann durch Anwendung von Druck nochmals erhöht werden. Alternativ oder zusätzlich ist es auch möglich, das Faservlies vor oder während des Verfestigungsschrittes zur Wärmebehandlung mit Dampf zu beaufschlagen. Der hierbei zur Anwendung kommende Wasserdampf kann dabei Temperaturen oberhalb von 100°C aufweisen.

In Verfahrensschritt g1) und/oder g2), insbesondere in Verfahrensschritt g2), wird das Flammschutzmittel in einer zweckmäßigen Ausgestaltung in partikulärer Form zugegeben, insbesondere in Form eines Pulvers, Granulats oder in Faserform. Selbstverständlich kann das Flammschutzmittel auf diesen Verfahrensstufen auch als wässriges System aufgesprüht werden. Ein unterstützender Flammschutz gelingt auch dadurch, dass dem zur Verfügung gestellten zerkleinerten Pflanzenmaterial und/oder der Materiallage gemäß Schritt d) und/oder dem Faserflor gemäß Schritt g1) oder g2) und/oder dem Vorvlies gemäß Schritt g2) und/oder dem Vlies gemäß Schritt h) mindestens eine Polyhydroxyverbindung zugesetzt wird.

Das erfindungsgemäße Verfahren zeichnet sich auch insbesondere dadurch aus, dass es möglich ist, die Materiallage aus dem zerkleinerten Pflanzenmaterial, den Faserflor, das Vorvlies und/oder das Vlies in einer Weise mit dem wässrigen System enthaltend das mindestens eine Flammschutzmittel zu beaufschlagen, insbesondere zu besprühen, ohne dass während des Verfahrensverlaufs das wässrige System bis zur Unterseite gelangt, und zwar ohne Einbußen beim Flammschutz in Kauf nehmen zu müssen. Die mit dem erfindungsgemäßen Verfahren mögliche Vorgehensweise erlaubt ein sehr wirtschaftliches Arbeiten. So ist es nicht nötig, Förderbänder oder Anlagenteile wegen anhaftenden feuchten Schmutzes bzw. wegen angetrockneter Bestandteile zu reinigen. Entfallen kostentreibende Unterbrechungen des Herstellverfahrens.

In einer besonders bevorzugten Ausführungsform des erfindungsgemäßen Verfahrens ist vorgesehen, dass über die Verfahrensschritte e), g1), g2) und h) eine Menge an Flammschutzmittel im Bereich von 0,01 bis 35 Gew.-%, insbesondere im Bereich von 0,1 bis 2 Gew.-%, bezogen auf das Gewicht der Faservliesmatte, insbesondere Dämmstoffmatte, in die Faservliesmatte, insbesondere Dämmstoffmatte, eingebracht wird.

Wird an mehreren Stufen des erfindungsgemäßen Verfahrens Flammen Schutzmittel in das Produkt bzw. Zwischenprodukt eingetragen, können hierfür sowohl identische wie auch unterschiedliche Schutzmittel verwendet werden. Demgemäß ist es zum Beispiel möglich, dass in den Verfahrensschritten e), g1), g2) und h) jeweils unterschiedliche oder identische Flammschutzmittel eingesetzt werden.

Auch in der Wahl, und der Einbringung des Bindemittels erlaubt das erfindungsgemäße Verfahren vielfältige Kombinationsmöglichkeiten. So kann beispielsweise der Verfahrensschritt f) zusätzlich in Schritt g1) und/oder g2) integriert sein und/oder nach Schritt g1) und/oder g2) vorgenommen werden.

Die der Erfindung zu Grunde liegende Aufgabe wird des Weiteren gelöst durch eine Faservliesmatte, insbesondere Dämmstoffmatte, erhältlich nach dem erfindungsgemäßen Verfahren. Diese Faservliesmatte kann z.B. eine Wärmedämmplatte und/oder eine Schalldämmplatte darstellen.

Mit der vorliegenden Erfindung geht die überraschende Erkenntnis einher, dass sich hinreichend flammengeschützte Dämmstoffplatten aus nachwachsenden Rohstoffen erhalten lassen, indem man beispielsweise die Eintragung eines Flammenschutzmittels in wohlabgestimmter Weise an ganz bestimmten Stellen des Verfahrensablaufs vorsieht. Auf diese Art gelingt eine sehr homogene Eintragung einer hinreichend großen Menge an Flammenschutzmittel in die Dämmstoffplatte.

Die mit dem erfindungsgemäßen Verfahren erhältlichen flammgeschützten Dämmstoffplatten, insbesondere Hanfdämmstoffplatten, genügen regelmäßig den Anforderungen der Brandschutzklasse B2 nach DIN 4102. Trotz der durch das erfindungsgemäße Verfahren gebotenen Möglichkeit, das Flammenschutzmittel vielfach in die Materialien der Dämmstoffplatte einzutragen, werden die Wärmedämmeigenschaften und auch die mechanischen Eigenschaften der erhaltenen Dämmplatte nicht beeinträchtigt. Die erfindungsgemäßen Faservliesmatten können für die Außenfasssadendämmung ebenso eingesetzt werden wie für die Innendämmung, d.h. sowohl für die Wärmedämmung von Wänden in Innenräumen und an Außenwänden von Gebäuden als auch für die Schalldämmung von Wänden im Gebäudeinneren wie von Außenfassaden.

## Patentansprüche

1. Verfahren zur Herstellung einer flammgeschützten Faservliesmatte, insbesondere Dämmstoffmatte, umfassend
a) Zurverfügungstellung von
zerkleinertem Pflanzenmaterial enthaltend Pflanzenfasern
oder
zerkleinertem Pflanzenmaterial enthaltend Pflanzenfasern und Schäben,
b) Zurverfügungstellung mindestens eines Bindemittels auf Basis von thermoplastischen Polymeren, insbesondere Bindemittelfaser,
c) Zurverfügungstellung von mindestens einem Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen,
d) Herstellung einer Materiallage mit einer Ober- und einer Unterseite aus dem zerkleinerten Pflanzenmaterial,
e) Beaufschlagen der Materiallage gemäß Schritt d) von der Oberseite mit einem wässrigen System, enthaltend mindestens ein Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen,
f) Versetzen, insbesondere Vermischen, des zerkleinerten Pflanzenmaterials mit dem mindestens einen Bindemittel,
g1) Austragung der Fasermischung enthaltend das zerkleinerte Pflanzenmaterial und das Bindemittel gemäß Schritt f) und das Flammschutzmittel gemäß Schritt e) auf ein Förderband unter Ausbildung eines Faserflors mit einer Ober- und einer Unterseite und Behandeln des Faserflors mit mindestens einem Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen, insbesondere Beaufschlagen des Faserflors von der Oberseite mit einem wässrigen System, enthaltend mindestens ein Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen,
und/oder
g2) Austragung der Fasermischung enthaltend das zerkleinerte Pflanzenmaterial und das Bindemittel gemäß Schritt f) und das Flammschutzmittel gemäß Schritt e) auf ein Förderband unter Ausbildung eines Faserflors, Bilden eines Vorvlieses mit einer Ober- und einer Unterseite mittels mindestens eines Vliesstreuers, insbesondere umfassend oder bestehend aus mindestens einer Stiftwalze, und/oder mittels mindestens eines Vliesbildners, insbesondere ausgestattet mit Nadeln oder Stiften, insbesondere des Vliesstreuers, und Behandeln des Vorvlieses mit mindestens einem Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen, insbesondere Beaufschlagen des Vorvlieses von der Oberseite mit einem wässrigen System, enthaltend mindestens ein Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen,
h) Bilden eines Vlieses mit einer Ober- und einer Unterseite aus dem Faserflor gemäß Schritt g1) oder aus dem Vorvlies gemäß Schritt g2) mittels mindestens eines Vliesbildners, insbesondere eines aerodynamischen Vliesbildners, enthaltend einen Tambour,
i) gegebenenfalls Behandeln dieses Vlieses mit mindestens einem Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen, insbesondere Beaufschlagen des Vlieses von der Oberseite mit einem wässrigen System, enthaltend mindestens ein Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen, und
j) Verfestigen des Vlieses, insbesondere mittels Druck und Wärme oder mittels Dampfbeaufschlagung oder mittels Beaufschlagung mit Druck und Dampf, unter Ausbildung der Faservliesmatte, insbesondere Dämmstoffmatte,
wobei in mehreren Stufen des Verfahrens Flammschutzmittel ausgewählt aus der Gruppe bestehend aus stickstoffhaltigen Phosphaten, Aluminiumphosphaten, Boraten, Borsäure, Borphosphorsäureestern, prä-oxidierte Viskosefasern, prä-oxidierten Polyacrylnitril-Fasern, Kohlenstofffasern, Reisschalen und deren beliebige Mischungen eingetragen werden und in den Verfahrensschritten e), g1), g2) jeweils unterschiedliche oder identische Flammschutzmittel eingesetzt werden.

2. Verfahren nach Anspruch 1, **dadurch gekennzeichnet, dass**
die Pflanzenfasern ausgewählt sind aus der Gruppe bestehend aus Hanf-, Flachs-, Jute-, Sisal-, Raps-, Kokos-, Kenaf-, Nessel-, Ramie-, Rohrkolben-, Getreidestroh-, Miscanthus- und Schilffasern oder Mischungen hiervon, insbesondere ausgewählt aus der Gruppe bestehend aus Hanf, Jute, Nessel, Flachs, Kenaf, Ramie und Miscanthus oder beliebigen Mischungen hiervon.

3. Verfahren nach Anspruch 1 oder 2, **dadurch gekennzeichnet, dass** die Schäben ausgewählt sind aus der Gruppe bestehend aus Hanf-, Flachs-, Jute-, Kenaf-, Nessel-, Ramie- und Miscanthusschäben oder beliebigen Mischungen hiervon.

4. Verfahren nach einem der vorangehenden Ansprüche, **dadurch gekennzeichnet, dass** das Bindemittel Fasern, Granulat oder Pulver oder beliebige Mischungen hiervon umfasst.

5. Verfahren nach Anspruch 4, **dadurch gekennzeichnet, dass** die Bindefasern thermoplastische Mono- oder Multikomponentenfasern darstellen, insbesondere Bikomponentenfasern.

6. Verfahren nach einem der vorangehenden Ansprüche, **dadurch gekennzeichnet, dass** die stickstoffhaltigen Phosphate Ammonium-, Melamin- oder Guanidinphosphate umfassen oder dass die Borate Ammonium-, Melamin-, Guanidin-, Kalium- oder Natriumborate umfassen.

7. Verfahren nach Anspruch 6, **dadurch gekennzeichnet, dass** das Flammschutzmittel in partikulärer Form, insbesondere pulver-, granulat- oder faserförmig, in Schritt g1) und/oder g2), insbesondere in Schritt g2), zugegeben wird.

8. Verfahren nach einem der vorangehenden Ansprüche, **dadurch gekennzeichnet, dass** dem zerkleinerten Pflanzenmaterial, der Materiallage, dem Faserflor, dem Vorvlies und/oder dem Vlies mindestens eine Polyhydroxyverbindung zugesetzt wird.

9. Verfahren nach einem der vorangehenden Ansprüche, **dadurch gekennzeichnet, dass** die Materiallage, der Faserflor, das Vorvlies und/oder das Vlies in einer Weise mit dem wässrigen System enthaltend das mindestens eine Flammschutzmittel beaufschlagt, insbesondere besprüht, werden, dass während des Verfahrensverlaufs das wässrige System nicht bis zur Unterseite gelangt.

10. Verfahren nach einem der vorangehenden Ansprüche, **dadurch gekennzeichnet, dass** über die Verfahrensschritte e), g1), g2) und i) eine Menge an Flammschutzmittel im Bereich von 0,01 bis 35 Gew.-%, insbesondere im Bereich von 0,1 bis 2 Gew.-%, bezogen auf das Gewicht der Faservliesmatte, insbesondere Dämmstoffmatte, in die Faservliesmatte, insbesondere Dämmstoffmatte, eingebracht wird.

11. Verfahren nach einem der vorangehenden Ansprüche, **dadurch gekennzeichnet, dass** in Verfahrensschritt g2) prä-oxidierte Viskosefasern, prä-oxidierte Polyacrylnitril-Fasern, Kohlenstofffasern oder Reisschalen oder beliebige Mischungen dieser Verbindungen, insbesondere Reisschalen, als Flammschutzmittel auf das Vorvlies aufgebracht, insbesondere aufgestreut, werden.

12. Verfahren nach einem der vorangehenden Ansprüche, **dadurch gekennzeichnet, dass** in dem zerkleinerten Pflanzenmaterial enthaltend Pflanzenfasern und Schäben die Pflanzenfasern und Schäben zumindest in Teilen miteinander verbunden vorliegen.

13. Verfahren nach einem der vorrangehenden Ansprüche, **dadurch gekennzeichnet, dass** Verfahrensschritt f) alternativ oder zusätzlich in Schritt g1) und/oder g2) integriert und/oder nach Schritt g1) und/oder g2) vorgenommen wird.

14. Verfahren nach einem der vorrangehenden Ansprüche, **dadurch gekennzeichnet, dass**
der Vliesbildner einen aerodynamischen Vliesbildner, enthaltend mindestens eine Nadelwalze oder einen Tambour darstellt.

15. Faservliesmatte, bevorzugt Dämmstoffmatte, besonders bevorzugt Gebäudeaußendämmmatte oder Gebäudeinnendämmmatte, erhältlich nach dem Verfahren gemäß einem der vorangehenden Ansprüche, umfassend die Verfahrensschritte a), b), c), d), e), f), g2), h) und j) sowie gegebenenfalls g1) und/oder i), wobei über die Verfahrensschritte e), g1), g2) und i) eine Menge an Flammschutzmittel im Bereich von 0,1 bis 2 Gew.-%, bezogen auf das Gewicht der Faservliesmatte, in die Faservliesmatte eingebracht wird, wobei in Verfahrensschritt g2) prä-oxidierte Viskosefasern, prä-oxidierte Polyacrylnitril-Fasern, Kohlenstofffasern oder Reisschalen oder beliebige Mischungen dieser Verbindungen als Flammschutzmittel auf das Vorvlies aufgebracht werden, oder erhältlich nach dem Verfahren gemäß einem der vorangehenden Ansprüche, umfassend die Verfahrensschritte a), b), c), d), e), f), g1), h) und j) sowie gegebenenfalls i), wobei über die Verfahrensschritte e), g1) und i) eine Menge an Flammschutzmittel im Bereich von 0,1 bis 2 Gew.-%, bezogen auf das Gewicht der Faservliesmatte, in die Faservliesmatte eingebracht wird, wobei in Verfahrensschritt g1) prä-oxidierte Viskosefasern, prä-oxidierte Polyacrylnitril-Fasern, Kohlenstofffasern oder Reisschalen oder beliebige Mischungen dieser Verbindungen als Flammschutzmittel auf den Faserflor aufgebracht werden.

16. Faservliesmatte nach Anspruch 15, **dadurch gekennzeichnet, dass** diese eine Wärmedämmplatte und/oder eine Schalldämmplatte darstellt.

## Claims

1. A method for producing a flame-retardant fiber non-woven mat, in particular insulating material mat, comprising
a) providing
ground plant matter containing plant fibers
or
ground plant matter containing plant fibers and shives,
b) providing at least one binder based on thermoplastic polymers, in particular binder fibers,
c) providing at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof,
d) producing a material layer having an upper side and a lower side from the ground plant matter,
e) treating the material layer according to step d), from the upper side, with an aqueous system, containing at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof,
f) adding the at least one binder to, in particular mixing said at least one binder into, the ground plant matter,
g1) discharging the fiber mixture containing the ground plant matter and the binder according to step f) and the flame retardant according to step e) onto a conveyor belt to form a fibrous web having an upper side and lower side; and treating the fibrous web with at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any desired thereof, in particular treating the fibrous web, from the upper side, with an aqueous system, containing at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof,
and/or
g2) discharging the fiber mixture containing the ground plant matter and the binder according to step f) and the flame retardant according to step e) onto a conveyor belt to form a fibrous web; forming a preliminary web having an upper side and a lower side by means of at least one non-woven disperser, in particular comprising or consisting of at least one pin roller, and/or by means of at least one non-woven former, in particular provided with needles or pins, in particular of the non-woven disperser; and treating the preliminary web with at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof, in particular treating the preliminary web, from the upper face, with an aqueous system, containing at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof,
h) forming a web having an upper side and a lower side from the fibrous web according to step g1) or from the preliminary web according to step g2) by means of at least one non-woven former, in particular an aerodynamic non-woven former, containing a drum,
i) optionally treating said web with at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof, in particular treating the web, from the upper side, with an aqueous system, containing at least one flame retardant selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof, and
j) bonding the web, in particular by means of pressure and heat or by treatment with steam or by treatment with pressure and steam, to form the fiber non-woven mat, in particular insulating material mat,
wherein in multiple stages of the method, flame retardants selected from the group consisting of nitrogen-containing phosphates, aluminum phosphates, borates, boric acid, boron phosphoric acid esters, preoxidized viscose fibers, preoxidized polyacrylonitrile fibers, carbon fibers, rice hulls and any mixtures thereof are introduced, and in method steps e), g1) and g2), different or identical flame retardants are used.

2. The method according to Claim 1, **characterized in that**
the plant fibers are selected from the group consisting of hemp, flax, jute, sisal, rapeseed, coconut, kenaf, nettle, ramie, cattail, cereal straw, miscanthus and reed fibers or mixtures thereof, in particular selected from the group consisting of hemp, jute, nettle, flax, kenaf, ramie and miscanthus or any mixtures thereof.

3. The method according to Claim 1 or 2, **characterized in that** the shives are selected from the group consisting of hemp, flax, jute, kenaf, nettle, ramie and miscanthus shives or any mixtures thereof.

4. The method according to any of the preceding claims, **characterized in that** the binder comprises fibers, granules or powder or any mixtures thereof.

5. The method according to Claim 4, **characterized in that** the binder fibers are thermoplastic monocomponent or multicomponent fibers, in particular bicomponent fibers.

6. The method according to any of the preceding claims, **characterized in that** the nitrogen-containing phosphates include ammonium, melamine or guanidine phosphates, or **in that** the borates include ammonium, melamine, guanidine, potassium or sodium borates.

7. The method according to Claim 6, **characterized in that** the flame retardant is added in particulate form, in particular in powder, granular or fiber form, in step g1) and/or g2), in particular in step g2).

8. The method according to any of the preceding claims, **characterized in that** at least one polyhydroxyl compound is added to the ground plant matter, the material layer, the fibrous web, the preliminary web and/or the non-woven.

9. The method according to any of the preceding claims, **characterized in that** the material layer, the fibrous web, the preliminary web and/or the non-woven are treated with, in particular sprayed with, the aqueous system containing the at least one flame retardant in such a way that the aqueous system does not reach the lower side over the course of the method.

10. The method according to any of the preceding claims, **characterized in that** by means of method steps e), g1), g2) and i), an amount of flame retardant in the range of 0.01 to 35 wt.%, in particular in the range of 0.1 to 2 wt.%, in relation to the weight of the fiber non-woven mat, in particular insulating material mat, is introduced into the fiber non-woven mat, in particular insulating material mat.

11. The method according to any of the preceding claims, **characterized in that** in method step g2), preoxidized viscose fibers, preoxidized polyacrylonitrile fibers, carbon fibers or rice hulls or any mixtures of said compounds, in particular rice hulls, as a flame retardant, are applied to, in particular spread onto, the preliminary web.

12. The method according to any of the preceding claims, **characterized in that** in the ground plant matter containing plant fibers and shives, the plant fibers and shives are present in a manner interconnected at least in part.

13. The method according to any of the preceding claims, **characterized in that** method step f) is alternatively or additionally integrated into step g1) and/or g2) and/or carried out after step g1) and/or g2).

14. The method according to any of the preceding claims, **characterized in that** the non-woven former is an aerodynamic non-woven former, containing at least one needle roller or a drum.

15. A fiber non-woven mat, preferably an insulating material mat, particularly preferably an external building insulating mat or internal building insulating mat, obtainable according to the method according to any of the preceding claims, comprising method steps a), b), c), d), e), f), g2), h) and j) and optionally g1) and/or i), wherein by means of method steps e), g1), g2) and i), an amount of flame retardant in the range of 0.1 to 2 wt.%, in relation to the weight of the fiber non-woven mat, is introduced into the fiber non-woven mat, wherein in method step g2), preoxidized viscose fibers, preoxidized polyacrylonitrile fibers, carbon fibers or rice hulls or any mixtures of said compounds, as a flame retardant, are applied to the preliminary web, or are obtainable according to the method according to any of the preceding claims, comprising method steps a), b), c), d), e), f), g1), h) and j) and optionally i), wherein by means of method steps e), g1) and i), an amount of flame retardant in the range of 0.1 to 2 wt.%, in relation to the weight of the fiber non-woven mat, is introduced into the fiber non-woven mat, wherein in method step g1), preoxidized viscose fibers, preoxidized polyacrylonitrile fibers, carbon fibers or rice hulls or any mixtures of said compounds, as a flame retardant, are applied to the fibrous web.

16. The fiber non-woven mat according to Claim 15, **characterized in that** said fiber non-woven mat is a heat-insulating panel and/or a sound-proofing panel.

## Revendications

1. Procédé de fabrication d'une natte en voile non tissé ignifuge, notamment d'une natte en matériau isolant, comprenant
a) la mise à disposition de
matériau végétal broyé contenant des fibres végétales
ou de
matériau végétal broyé contenant des fibres végétales et des anas,
b) la mise à disposition d'au moins un liant à base de polymères thermoplastiques, notamment de fibres liantes,
c) la mise à disposition d'au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci,
d) la fabrication d'une couche de matière dotée d'une face inférieure et d'une face supérieure à base de matière végétale broyée,
e) la soumission de la couche de matière obtenue conformément à l'étape d) en partant de sa face supérieure à un système aqueux contenant au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci,
f) le déplacement, notamment le mélange du matériau végétal broyé avec ledit liant au moins,
g1) le déversement du mélange de fibres contenant le matériau végétal broyé et le liant conformément à l'étape f) et l'agent ignifuge conformément à l'étape e) sur une bande transporteuse moyennant la formation d'un voile fibreux avec une face inférieure et une face supérieure ainsi que le traitement voile fibreux avec au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci, notamment la soumission du voile fibreux en partant de sa face supérieure à un système aqueux contenant au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci,
et/ou
g2) le déversement du mélange de fibres contenant le matériau végétal broyé et le liant conformément à l'étape f) et l'agent ignifuge conformément à l'étape e) sur une bande transporteuse moyennant la formation d'un voile fibreux, la formation d'un voile préliminaire avec une face inférieure et une face supérieure au moyen d'au moins un disperseur de non-tissé, notamment comprenant ou ayant au moins pour éléments constitutifs un cylindre à pointes, et/ou au moyen d'au moins un formateur de voile équipé en particulier d'aiguilles ou de pointes, notamment du disperseur de non-tissé, et le traitement du voile préliminaire avec au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci, notamment la soumission du voile préliminaire en partant de sa face supérieure à un système aqueux contenant au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci,
h) la formation d'un voile avec une face inférieure et une face supérieure à partir du voile fibreux conformément à l'étape g1) ou du voile préliminaire conformément à l'étape g2) au moyen d'au moins un formateur de voile, notamment un formateur de voile aérodynamique, contenant un tambour,
i) le traitement éventuel de ce voile avec au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci, notamment la soumission du voile en partant de sa face supérieure à un système aqueux contenant au moins un agent ignifuge sélectionné dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci, et
j) la consolidation du voile, notamment par la pression et la chaleur ou par l'application de vapeur ou par l'application de pression et de vapeur moyennant la formation de la natte en voile non tissé, notamment de la natte en matériau isolant,
dans lequel des agents ignifuges sélectionnés dans le groupe constitué de phosphates contenant de l'azote, de phosphates d'aluminium, de borates, d'acide borique, d'esters d'acide borique et phosphorique, de fibres de viscose préoxydées, de fibres de polyacrylonitrile préoxydées, de fibres de carbone, d'écorces de riz et des mélanges quelconques de ceux-ci sont insérés au cours de plusieurs étapes du procédé et des agents ignifuges différents ou identiques sont respectivement utilisés aux étapes e), g1), g2).

2. Procédé selon la revendication 1, **caractérisé en ce que**
les fibres végétales sont sélectionnées dans le groupe constitué de fibres de chanvre, de lin, de jute, de sisal, de colza, de coco, de kénaf, d'ortie, de ramie, de typha, de paille de céréales, de miscanthus et de roseau ou des mélanges quelconques de celles-ci, notamment sélectionnées dans le groupe constitué de chanvre, de jute, d'ortie, de lin, de kénaf, de ramie et de miscanthus ou des mélanges quelconques de ceux-ci.

3. Procédé selon la revendication 1 ou 2, **caractérisé en ce que** les anas sont sélectionnées dans le groupe constitué d'anas de chanvre, de lin, de jute, de kénaf, d'ortie, de ramie, de miscanthus ou des mélanges quelconques de celles-ci.

4. Procédé selon l'une quelconque des revendications précédentes, **caractérisé en ce que** le liant comprend des fibres, des granulés ou de la poudre ou des mélanges quelconques de ceux-ci.

5. Procédé selon la revendication 4, **caractérisé en ce que** les fibres liantes constituent des fibres thermoplastiques à un seul composant ou à plusieurs composants, notamment des fibres à deux composants.

6. Procédé selon l'une quelconque des revendications précédentes, **caractérisé en ce que** les phosphates contenant de l'azote renferment des phosphates d'ammonium, de mélamine ou de guanidine ou que les borates renferment des borates d'ammonium, de mélamine, de guanidine, de potassium ou de sodium.

7. Procédé selon la revendication 6, **caractérisé en ce que** l'agent ignifuge est ajouté sous une forme particulière, notamment sous la forme de poudre, de granulés ou de fibres à l'étape g1) et/ou g2), en particulier à l'étape g2).

8. Procédé selon l'une quelconque des revendications précédentes, **caractérisé en ce qu'**au moins un composé polyhydroxyle est additionné au matériau végétal broyé, à la couche de matière, au voile fibreux, au voile préliminaire et/ou au non-tissé.

9. Procédé selon l'une quelconque des revendications précédentes, **caractérisé en ce que** la couche de matière, le voile fibreux, le voile préliminaire et/ou le voile sont soumis à un système aqueux contenant ledit agent ignifuge au moins, notamment en sont aspergés, d'une manière telle que le système aqueux ne parvient pas sur la face inférieure durant le déroulement du procédé.

10. Procédé selon l'une quelconque des revendications précédentes, **caractérisé en ce qu'**une quantité d'agent ignifuge de l'ordre de 0,01 à 35 % en poids, notamment de l'ordre de 0,1 à 2 % en poids, rapportée au poids de la natte en voile non tissé, en particulier de la natte en matériau isolant, est introduite dans la natte en voile non tissé, en particulier dans la natte en matériau isolant pendant les étapes de procédé e), g1), g2) et i).

11. Procédé selon l'une quelconque des revendications précédentes, **caractérisé en ce que** des fibres de viscose préoxydées, des fibres de polyacrylonitrile préoxydées, des fibres de carbone ou des écorces de riz ou des mélanges quelconques de ces composés, notamment des écorces de riz, sont appliqués, en particulier saupoudrés, comme agent ignifuge sur le voile préliminaire au cours de l'étape de procédé g2).

12. Procédé selon l'une quelconque des revendications précédentes, **caractérisé en ce que** les fibres végétales et les anas sont présentes au moins en partie reliées les unes aux autres dans le matériau végétal broyé contenant des fibres végétales et des anas.

13. Procédé selon l'une quelconque des revendications précédentes, **caractérisé en ce que** l'étape de procédé f) est effectuée en alternative ou intégrée en plus à l'étape g1) et/ou g2) et/ou après l'étape g1) et/ou g2).

14. Procédé selon l'une quelconque des revendications précédentes, **caractérisé en ce que** le formateur du voile constitue un formateur de voile aérodynamique, contenant au moins un cylindre à aiguilles ou un tambour.

15. Natte en voile non tissé, de préférence natte en matériau isolant, mieux encore natte d'isolation extérieure de bâtiment ou natte d'isolation intérieure de bâtiment, disponible d'après le procédé conformément à l'une quelconque des revendications précédentes, comprenant les étapes de procédé a), b), c), d), e), f), g2), h) et j) ainsi qu'éventuellement g1) et /ou i),
dans lequel une quantité d'agent ignifuge de l'ordre de 0,1 à 2 % en poids, rapportée au poids de la natte en voile non tissé, est introduite dans la natte en voile non tissé pendant les étapes de procédé e), g1), g2) et i),
dans lequel des fibres de viscose préoxydées, des fibres de polyacrylonitrile préoxydées, des fibres de carbone ou des écorces de riz ou des mélanges quelconques de ces composés sont appliqués comme agent ignifuge sur le voile préliminaire au cours de l'étape de procédé g2), ou
disponible d'après le procédé conformément à l'une quelconque des revendications précédentes, comprenant les étapes de procédé a), b), c), d), e), f), g1), h) et j) ainsi qu'éventuellement i),
dans lequel une quantité d'agent ignifuge de l'ordre de 0,1 à 2 % en poids, rapportée au poids de la natte en voile non tissé, est introduite dans la natte en voile non tissé pendant les étapes de procédé e), g1) et i),
dans lequel des fibres de viscose préoxydées, des fibres de polyacrylonitrile préoxydées, des fibres de carbone ou des écorces de riz ou des mélanges quelconques de ces composés sont appliqués comme agent ignifuge sur le voile fibreux au cours de l'étape de procédé g1).

16. Natte en voile non tissé selon la revendication 15, **caractérisé en ce que** celle-ci constitue une plaque d'isolation thermique et/ou une plaque d'isolation phonique.
